**Europäisches Patentamt**

**European Patent Office**

**Office européen des brevets**

(19)

(11) Numéro de publication : **0 406 058 B1**

(12) **FASCICULE DE BREVET EUROPEEN**

(45) Date de publication du fascicule du brevet :
**30.09.92 Bulletin 92/40**

(51) Int. Cl.$^5$ : **G01P 5/00**

(21) Numéro de dépôt : **90401705.0**

(22) Date de dépôt : **18.06.90**

(54) **Dispositif de mesure de la vitesse du vent à moyenne altitude.**

(30) Priorité : **26.06.89 FR 8908462**

(43) Date de publication de la demande :
**02.01.91 Bulletin 91/01**

(45) Mention de la délivrance du brevet :
**30.09.92 Bulletin 92/40**

(84) Etats contractants désignés :
**CH DE ES FR GB IT LI SE**

(56) Documents cités :
**EP-A- 0 204 295
US-A- 4 195 931
IEE PROCEEDINGS SECTION A à I, vol. 131,
no. 5, partie H, octobre 1984, pages 325-330,
Old Woking, GB; S. VALETTE et
al.:"Integrated-optical circuits achieved by
planar technology on silicon substrates: application to the optical spectrum analyser"**

(73) Titulaire : **CENTRE NATIONAL DE LA
RECHERCHE SCIENTIFIQUE
15, quai Anatole France
F-75007 Paris (FR)**

(72) Inventeur : **Garnier, Anne
165 Avenue Aristide Briand
F-94230 Cachan (FR)**
Inventeur : **Chanin, Marie Lise
41 Allée des Vaupepins
F-91370 Verrières le Buisson (FR)**
Inventeur : **Hauchecorne, Alain
10 Allée des Gardes Royales
F-78000 Versailles (FR)**
Inventeur : **Porteneuve, Jacques Charles
3 Allée de la Graineterie
F-91370 Verrières le Buisson (FR)**

(74) Mandataire : **Michelet, Alain et al
Cabinet Harlé et Phelip 21 rue de la
Rochefoucauld
F-75009 Paris (FR)**

Jouve, 18, rue Saint-Denis, 75001 PARIS

## Description

La présente invention concerne un dispositif de mesure de la vitesse du vent à moyenne altitude par effet Doppler dans le domaine des fréquences lumineuses.

La mesure de la vitesse du vent revêt une grande importance tant pour l'acquisition d'une meilleure connaissance de notre environnement que pour prévisions météorologiques.

La mesure de cette vitesse à basse altitude peut être aisément réalisée avec des radiosondages alors qu'en haute altitude celle-ci peut être mesurée à l'aide de radars.

Au contraire, il n'existe aucune méthode satisfaisante permettant la mesure continue de la vitesse du vent à moyenne altitude c'est-à-dire à des altitudes comprises entre 25 et 60 kms. Ce sont généralement des mesures faites à partir de fusées qui permettent de réaliser ces mesures. Ce type de mesure est coûteux et les mesures ne peuvent donc pas être répétées aussi souvent qu'il serait souhaitable.

La mesure de la vitesse du vent par effet Doppler est une méthode bien connue. Selon la nouvelle méthode décrite ici, des impulsions laser de fréquences déterminées sont émises et la lumière diffusée en retour par effet Rayleigh est analysée. Lors de son interaction avec l'atmosphère, la raie laser a subi un élargissement Doppler et un décalage spectral correspondant à la vitesse du vent dans la direction de visée.

La mesure du décalage spectral permet d'accéder à la vitesse du vent dans la direction de visée.

Une méthode similaire est connue pour des mesures depuis le sol ou à faible altitude, et, en tous les cas à faible distance du laser émetteur. Il était jusqu'à présent considéré impossible d'appliquer cette méthode pour la mesure de la vitesse du vent à moyenne altitude car le flux diffusé en retour susceptible d'être reçu était considéré comme insuffisant pour permettre la mesure du décalage spectral.

Le problème à la base de l'invention est donc de proposer un dispositif qui permette une mesure de décalage spectral à partir d'un flux lumineux faible qui soit exploitable pour la mesure de la vitesse du vent à moyenne altitude.

L'interféromètre de Fabry-Perot, constitué de deux surfaces parallèles face-à-face fortement réfléchissantes, est connu pour permettre la réalisation de mesures de fréquences avec une haute résolution. Toutefois, son utilisation pour la mesure du déplacement spectral dans un dispositif de mesure de la vitesse du vent par effet Doppler ne constitue pas en elle-même une méthode permettant une mesure à moyenne altitude.

L'invention concerne donc un dispositif de mesure de la vitesse du vent à moyenne altitude par effet Doppler dans le domaine des fréquences lumineuses dans lequel un laser émet des impulsions, un télescope reçoit la lumière diffusée par effet Rayleigh, un interféromètre est utilisé pour mesurer le déplacement spectral de la lumière diffusée par rapport à la lumière émise.

Selon l'invention, l'interféromètre est un interféromètre de Fabry-Pérot monolithique en silice dans lequel une partie de l'un des miroirs est recouverte d'une surépaisseur, l'espacement des miroirs et la surépaisseur étant déterminés de telle sorte que les bandes passantes de chacun des deux filtres ainsi réalisés soient centrées sur les flancs de la répartition spectrale de la lumière rétrodiffusée, lorsque la vitesse dans la direction de visée est nulle.

Selon un mode de réalisation préféré de l'invention, le système de réception comporte une pluralité de télescopes pour chaque direction de mesure.

L'invention sera décrite en détail en référence aux figures dans lesquelles :

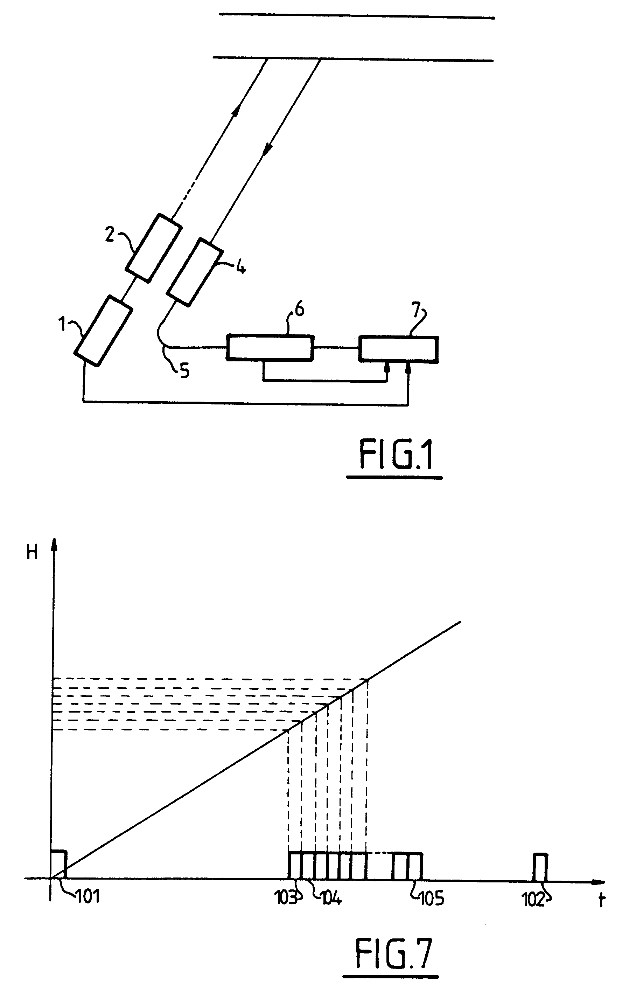

– La figure 1 est un schéma de principe de l'invention.

– La figure 2 est un schéma du boîtier de réception correspondant à la mesure de la vitesse du vent dans une direction.

– La figure 3 est une vue en coupe du dispositif interférométrique utilisé selon l'invention.

– La figure 4 est une représentation de la bande passante du dispositif de la figure 3 par rapport au spectre de la lumière rétrodiffusée.

– La figure 5 est une vue schématique de l'interféromètre de contrôle.

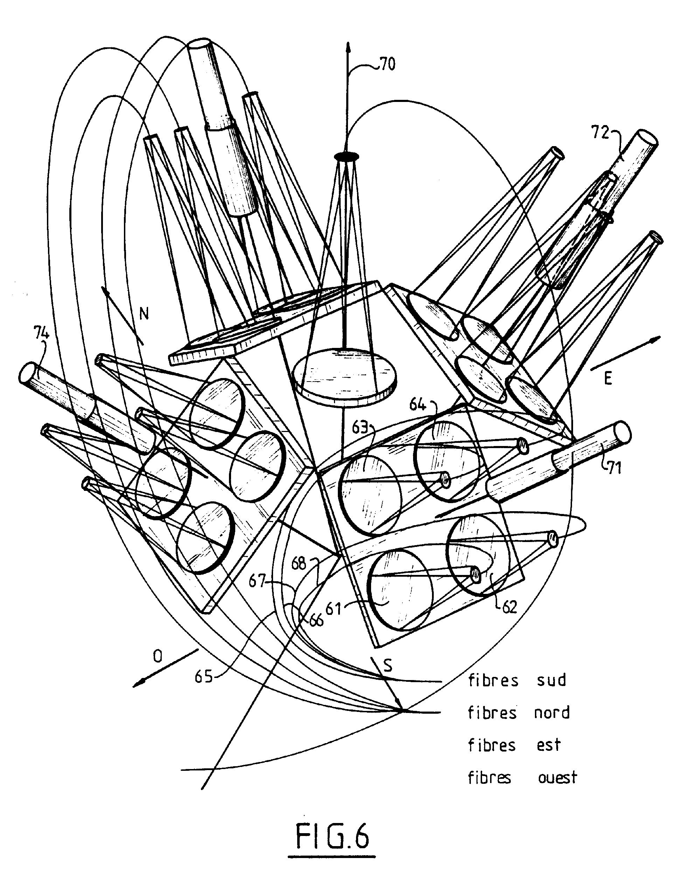

– La figure 6 est une vue schématique de l'ensemble émetteur-récepteur du dispositif de mesure de l'invention.

Le dispositif de mesure de la vitesse du vent à moyenne altitude par effet Doppler dans le domaine des fréquences lumineuses comporte un laser 1 qui émet des impulsions. Ce laser est stable et émet une lumière spectralement pure. On utilisera de préférence un laser à impulsions à Yag monomode longitudinal et transverse qui émet un faisceau monochromatique à une longueur d'onde de 532nm.

De préférence, le faisceau émis par le laser 1 est envoyé dans la direction requise par une optique de transfert et un télescope 2 qui concentre l'énergie du faisceau dans la zone de mesure en diminuant sa divergence par rapport à celle du faisceau sortant du laser. Le flux rétrodiffusé est reçu par un télescope de réception 4 de préférence parallèle à la direction d'émission du faisceau laser. Ce flux collecté est approximativement proportionnel à la surface de la pupille d'entrée du télescope de réception 4 qui est donc la plus grande possible. Toutefois, dans un mode réalisation préféré, ce télescope unique peut être remplacé par un ensemble de collecteurs 61-64 d'axes parallèles, chacun constitué d'un miroir parabolique au foyer duquel se trouve l'extrémité polie d'une fibre optique 65-68. Les fibres issues des différents foyers sont ensuite rassemblées en un faisceau unique 5 et amenées au boîtier de réception 6 commun.

On peut également utiliser en réception un télescope unique ayant une inclinaison fixe par rapport à la verticale et pivotant autour d'un axe vertical.

La lumière reçue par le télescope de réception 4 est transmise par une liaison par fibres optiques 5 au boîtier de réception 6 qui réalise l'analyse optique de la lumière reçue et émet des signaux électriques qui sont fonctions de décalage spectral de la lumière diffusée par rapport à la lumière émise par le laser de mesure 1.

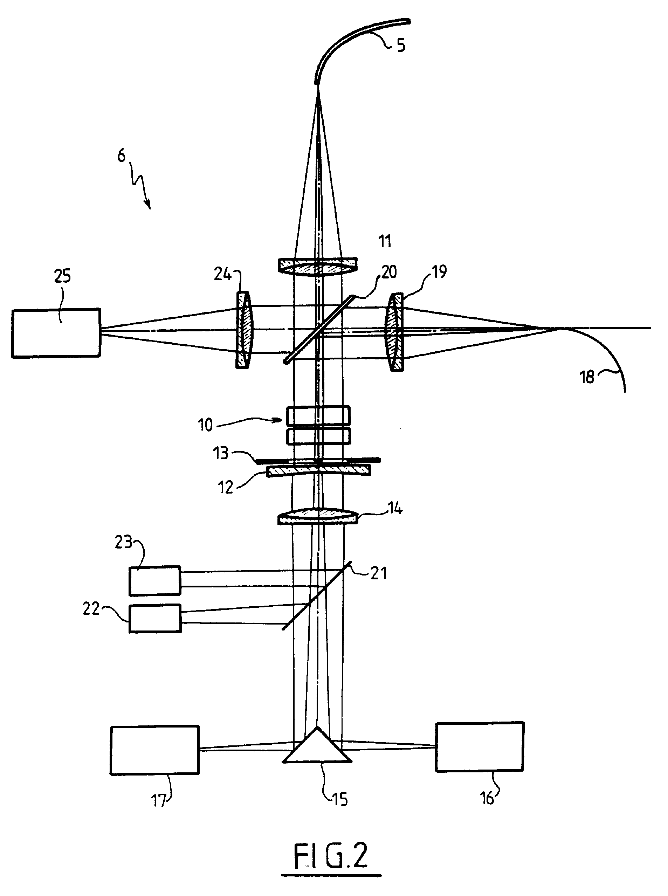

L'analyse optique de la lumière reçue est représentée sur la figure 2. Un interféromètre 10 est éclairé en lumière parallèle par la lumière à analyser. A cet effet, l'extrémité de la fibre optique 5 est placée au foyer d'un système optique 11.

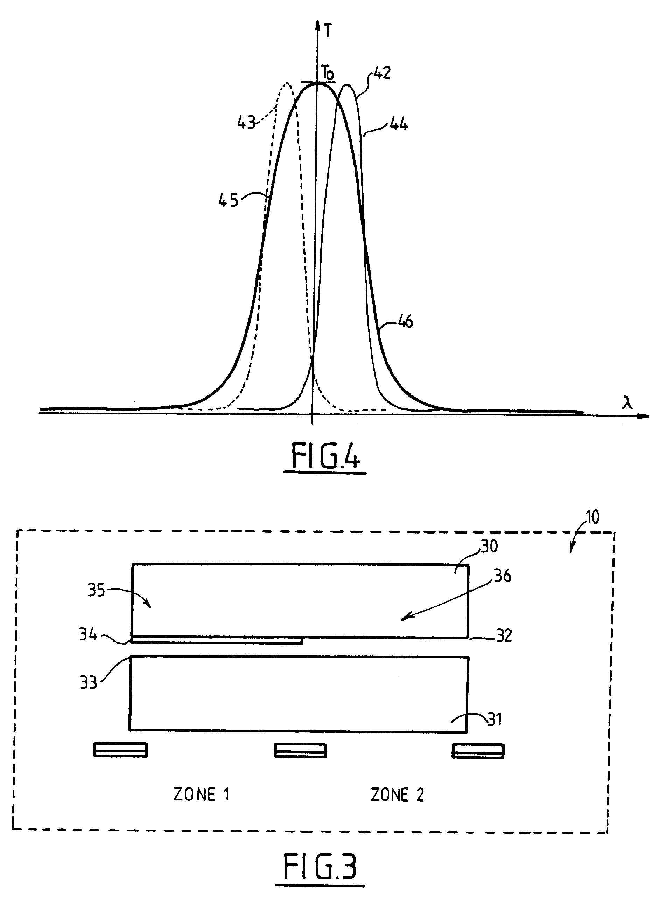

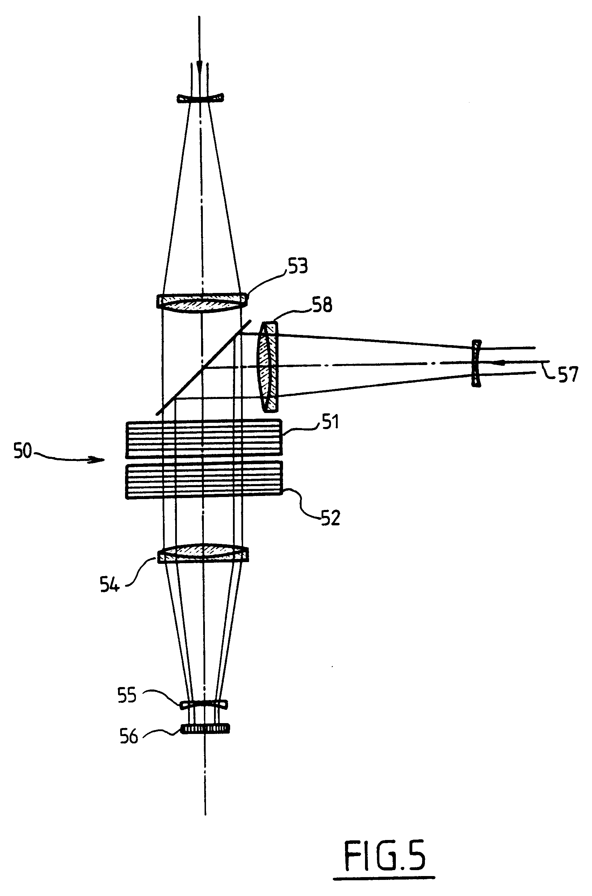

L'interféromètre 10 utilisé est représenté en détail sur la figure 3. Il comporte deux faces réfléchissantes 32 et 33 parallèles et ayant des coefficients de réflection élevés. Ces faces sont portées par des supports 30 et 31. Sur une partie de sa surface, de préférence la moitié, l'une des faces 32 de l'interféromètre 10 est recouverte d'une couche d'épaisseur uniforme 34. Cette surépaisseur qui a l'effet d'une couche déphasante est de préférence en silice. Afin d'améliorer la stabilité de cet interféromètre, il est monolithique, en silice. Les supports 30 et 31 sont associés l'un à l'autre par adhérence moléculaire. l'interféromètre ainsi réalisé a une bande passante correspondant à celle de deux interféromètres de Fabry-Perot, le premier ayant une épaisseur correspondant à la distance entre les faces 32 et 33, le deuxième ayant une épaisseur correspondant à la distance entre la couche 34 et la face 33. La bande passante de cet interféromètre est donc constituée de deux pics 43 et 44 représentés sur la figure 4. La distance entre les faces 32 et 33 et l'épaisseur de la couche de silice 34 est choisie de telle manière que les pics 43 et 44 soient centrés sur les flancs 45 et 46 de la raie 42 correspondant à la répartition spectrale de la lumière rétrodiffusée lorsque la vitesse dans la direction de visée est nulle, c'est-à-dire lorsque la direction visée est verticale.

La structure de l'interféromètre 10 permet d'obtenir un positionnement précis des deux pics 43 et 44. De plus, en cas de modification éventuelle de la bande passante dûe à une variation de l'environnement (pression de l'air, température...) au niveau de l'interféromètre, ce déplacement produit ses effets de manière analogue sur chacune des raies, introduisant une translation sans déformation de la bande passante.

Comme nous l'avons vu plus haut, l'effet Doppler produit un décalage spectral de la lumière rétrodiffusée qui est fonction de la composant de la vitesse du vent dans la direction de visée. Cela correspond donc à un déplacement du spectre 42 par rapport aux bandes passantes 43 et 44.

Dans le boîtier de réception, en aval de l'interféromètre, les flux lumineux ayant traversé l'interféromètre respectivement dans les zones comprenant ou ne comprenant pas la surépaisseur de silice 34 sont dissociés. De préférence, cette dissociation est réalisée par l'utilisation de deux prismes 12 produisant des décalages angulaires de directions opposées pour chacun de ces faisceaux. Ces prismes 12 ont dans le plan perpendiculaire à l'axe du faisceau lumineux, des formes complémentaires de celles des zones 35, 36 définies par l'interféromètre leur permettant de dissocier les flux lumineux ayant respectivement traversé chacune des zones 35, 36 et afin d'optimiser la séparation de ces flux lumineux, un masque 13 est interposé entre l'interféromètre 10 et les prismes 12. Un système optique 14 fait converger chacun des faisceaux lumineux produits par ce système sur des récepteurs 16 et 17. Afin d'assurer une meilleure séparation, un prisme réfléchissant 15 recevant sur deux faces différentes deux faisceaux produits par le système optique 14 est interposé entre ce système optique et les récepteurs 16 et 17. Ces récepteurs, qui doivent être sensibles, sont de préférence des photomultiplicateurs.

En l'absence de décalage Doppler, c'est-à-dire pour une visée verticale, les bandes passantes 43 et 44 de chacune des zones de l'interféromètre 10 occupent une position donnée par rapport à la répartition spectrale de la lumière rétrodiffusée 42 et l'énergie transmise par chacune de ces zones n'est a priori pas égale. Le poids relatif des signaux produits par les photomultiplicateurs 16 et 17 a une valeur donnée qui tient lieu de référence.

Lorsque la vitesse du vent a une composant dans une direction de visée inclinée, par effet Doppler, le spectre de la lumière rétrodiffusée est décalé et les flux transmis par chacune des zones de l'interféromètre diffèrent. Les signaux électriques produits par les photomultiplicateurs 16 et 17 présentent un poids relatif différent du poids relatif de référence, traduisant le décalage spectral.

Le traitement des signaux électriques fournis par les photomultiplicateurs 16 et 17 au sein de l'unité de traitement 7 permettent l'élaboration d'un signal directement représentatif de la vitesse du vent.

La qualité de la mesure nécessite essentiellement la maîtrise de la position relative de la lumière rétrodiffusée par rapport aux bandes passantes 43 et 44. La mesure de la vitesse du vent qui exploite ce déplacement relatif peut être pertubée principalement par deux phénomènes liés à l'appareil de mesure qui peuvent également introduire ce type de déplacement mais qui sont contrôlés par des mesures régulières dans la direction de visée verticale de référence. On peut également s'affranchir des pointés verticaux et contrôler séparément ces phénomènes, le résultat du contrôle étant un signal électrique qui est pris en compte par l'unité de traitement qui peut introduire la compensation adaptée.

Le premier type de déplacement dû à l'appareil peut provenir d'une variation de la longueur d'onde d'émission du laser 1 de mesure. Celle-ci peut être contrôlée par l'interféromètre de contrôle représenté à la figure 5 par rapport à un laser hélium-néon 57 dont la stabilité à $10^{-9}$ près est assurée.

Une très faible partie du flux émis par le laser Yag 1 est prélevée par une fibre optique de manière à produire, à partir du système optique 53, un flux de lumière parallèle qui traverse un interféromètre en coin 50. L'interféromètre en coin 50 est formé de deux lames fortement réfléchissantes légèrement inclinées l'une par rapport à l'autre formant ainsi un système de franges dont le pas et la position sont fonctions de la longueur d'onde. Le système optique 54 forme l'image de ces franges sur une barrette de photodiodes 56. De manière analogue, des franges sont produites par le même interféromètre 50 par le flux lumineux émis par le laser hélium-néon 57. Le système optique 58 et la lame dichroïque 59 font traverser au flux lumineux, émis par le laser l'interféromètre en coin 50 formant ainsi par le système optique 54-55 un réseau de franges sur les barrettes de photodiodes 56 venant se superposer aux franges formées par le flux lumineux issu du laser de mesure.

Lorsque, quelle qu'en soit la raison, la longueur d'onde d'émission du laser 1 de mesure varie, le réseau de franges formé par l'interféromètre 50 se déplace par rapport à celui formé par ce même interféromètre à partir du flux lumineux du laser 57 hélium-néon. Le signal électrique émis par la barrette 56 de photodiodes est caractéristique de ce déplacement et pris en compte par l'unité de traitement qui peut le compenser lors de l'élaboration de la grandeur caractéristique de la vitesse du vent.

La deuxième cause du déplacement relatif est le déplacement de la bande passante 43, 44 de l'interféromètre 10 correspondant aux zones 35 et 36. Ce déplacement, qui peut être dû à l'environnement de l'interféromètre sera de même nature sur chacune des zones c'est-à-dire que la fonction de transfert de l'interféromètre ne sera pas modifiée mais simplement translatée, les positions relatives de chacune des bandes passantes 43 et 44 étant maintenues. Ce déplacement est contrôlé à l'aide d'un laser de contrôle hélium-néon stabilisé 18 qui, par l'intermédiaire du système optique 19 et de la lame traitée 20, traverse l'interféromètre 10, le masque 13 et les prismes 12 et converge par l'intermédiaire du système optique 14 et de la lame dichroïque 21 sur deux photodiodes 22 et 23. La répartition spectrale de la lumière émise par le laser de contrôle 18 étant parfaitement stabilisée, les diodes 22 et 23 fournissent des signaux électriques qui sont représentatifs de la position de la bande passante 43, 44. Les signaux électriques émis par les photodiodes 22 et 23 sont fournis à l'unité de traitement qui peut prendre en compte ces éventuels déplacements des bandes passantes 43 et 44 lors de l'élaboration du signal représentatif de la vitesse du vent.

La forme du spectre de la lumière rétrodiffusée 42 est fonction en particulier de la température. La connaissance de cette forme grâce à la mesure simultanée de la température permet d'accéder au déplacement spectral caractéristique de la vitesse du vent dans la direction de visée à partir des signaux émis par les photomultiplicateurs 16 et 17. Cette connaissance est obtenue à partir de l'analyse du flux lumineux reçu par une voie annexe 25 traitant la lumière reçue par l'intermédiaire d'un système optique 24 et prélevée partiellement par une lame traitée 20 sur le flux de lumière rétrodiffusée.

La structure du dispositif et particulièrement le type d'interféromètre 10 utilisé pour analyser le déplacement spectral du flux rétrodiffusé par rapport au flux émis lui confère une grande stabilité intrinsèque. De plus, par les moyens décrits plus haut, les éventuelles instabilités résiduelles sont contrôlées au niveau du boîtier de réception et prises en compte lors du traitement.

Cet ensemble de disposition permet de réaliser des mesures de grande précision du décalage spectral bien que le signal rétrodiffusé soit très faible.

Le dispositif décrit jusqu'à présent mesure la vitesse du vent dans une direction. Il est possible de réaliser un système comportant une structure unique pivotante permettant des mesures dans différentes directions. Un système de mesure complet comporte de préférence une voie d'émission et de réception verticale 70 utilisée comme voie de référence, et quatre voies de mesure 71-74 correspondant à des composantes de vitesses horizontales dans les quatre directions cardinales, bien que deux voies orthogonales soient en fait suffisantes. L'ensemble permet donc caractériser le vecteur vitesse vent.

Le signal rétrodiffusé par une couche atmosphérique à une altitude donnée est séparé du signal d'émission par la durée nécessaire à la lumière pour effectuer le trajet depuis l'émetteur jusqu'à la couche concernée et le retour jusqu'au récepteur.

Le découpage temporel 100 du signal rétrodiffusé correspond donc à un découpage en altitude 110 des couches atmosphériques.

Dans l'exemple représenté sur la figure 7, les impulsions 101, 102 émises par le laser de mesure 1 sont séparées de $33 \cdot 10^{-3}$/s, chaque mesure 103-105 dure $10^{-6}$s correspondant à une définition en altitude de 150m, on effectue 1 024 mesures dont la première significative 103 intervient dès la désobturation du détecteur, soit $60 \cdot 10^{-6}$s après l'émission de l'impulsion, correspondant à une couche située à 9 kms d'altitude.

Ces chiffres peuvent être modifiés en fonction du domaine d'altitude sondé.

En particulier, on peut réduire la durée de mesure pour obtenir une meilleure résolution verticale, notamment pour les plus basses altitudes.

L'instrument décrit ci-dessus est optimisé pour une mesure du vent dans le domaine d'altitude 25-60kms. Le même principe peut être utilisé pour les couches atmosphériques inférieures (5-25kms) même si la raie rétrodiffusée comporte une important contribution due à la diffusion Mie par les poussières et aérosols atmosphériques. Les caractéristiques de l'interféromètre sont alors modifiées en conséquence.

L'optomisation dans le choix des paramètres du Lidar Doppler (champ, résolution ...), tiendra compte du domaine d'altitude envisagé.

## Revendications

1. Dispositif de mesure de la vitesse du vent à moyenne altitude par effet Doppler dans le domaine des fréquences lumineuses dans lequel :
   . un laser (1) émet des impulsions,
   . un système de réception (4) comportant un téléscope reçoit la lumière diffusée,
   . un interféromètre (10) est utilisé pour mesure le déplacement spectral de la lumière diffusée par rapport à la lumière émise,
   caractérisé en ce que l'interféromètre est un interféromètre de Fabry-Pérot dans lequel une partie de l'un des miroirs (30, 31) de l'interféromètre (10) est recouvert d'une surépaisseur (34), l'espacement des deux miroirs (30,31) et la surépaisseur (34) étant déterminés de telle sorte que les bandes passantes (43, 44) de chacun des deux filtres ainsi réalisés soient centrées sur les flancs de la répartition spectrale de la lumière rétrodiffusée 42, lorsque la vitesse dans la direction de visée est nulle.

2. Dispositif de mesure selon la revendication 1, caractérisé en ce qu'il comporte un double prisme (12) placé à la sortie de l'interféromètre (10) pour séparer le flux lumineux correspondant à respectivement chacun des filtres.

3. Dispositif de mesure selon l'une quelconque des revendications 1 et 2, caractérisé en ce qu'il comporte une voie de réception verticale (70) utilisée comme voie de référence.

4. Dispositif de mesure selon l'une quelconque des revendications 1 à 3, caractérisé en ce qu'il comporte au moins deux voies de mesure (71, 74) correspondant à des composantes de vitesse dans des directions cardinales différentes.

5. Dispositif de mesure selon l'une quelconque des revendications 1 à 4, caractérisé en ce qu'il comporte un laser continu (57) émettant un faisceau de longueur d'onde stable utilisé pour contrôler la stabilité de l'interféromètre (10).

6. Dispositif de mesure selon l'une quelconque des revendications 1 à 5, caractérisé en ce que le système de réception (4) comporte une pluralité de téléscopes (61-64) pour chaque direction de mesure.

7. Dispositif de mesure selon l'une quelconque des revendications 1 à 5, caractérisé en ce que le système de réception (4) comporte une structure unique pivotante permettant des mesures dans différentes directions.

8. Dispositif de mesure selon l'une quelconque des revendications 1 à 7, caractérisé en ce qu'il comporte des fibres optiques (65-68) assurant la liaison entre les téléscopes (61-64) de réception et un dispositif d'analyse (6).

9. Dispositif de mesure selon l'une quelconque des revendications 1 à 8, caractérisé en ce qu'il comporte un téléscope (2) réduisant la divergence du faisceau émis par le laser (1).

10. Dispositif selon l'une quelconque des revendications 1 à 9 dans lequel les miroirs de l'interféromètre (10) sont fixés l'un à l'autre par adhérence moléculaire.

## Patentansprüche

1. Vorrichtung zur Messung der Windgeschwindigkeit in mittleren Höhen mit Hilfe des Doppler-Effekts im Lichtfrequenzbereich, wobei
   – ein Laser (1) Impulse aussendet,
   – ein Empfängersystem (4), umfassend ein Teleskop, das gestreute Licht empfängt,
   – ein Interferometer (10) verwendet wird, um die Spektralverschiebung des gestreuten Lichts im Verhältnis zum emittierten Licht zu messen,
   dadurch gekennzeichnet, daß das Interferometer ein Interferometer von Fabry-Pérot ist, worin ein Teil eines der Spiegel (30, 31) des Interferometers (10) mit einer Überschicht (34) abgedeckt ist, wobei der Abstand der beiden Spiegel (30, 31) und die Überschicht (34) so festgelegt sind, daß die durchlaufenden Banden (43, 44) eines jeden der beiden so erzeugten Filter auf die Ränder der Spektralverteilung des rückgestreuten Lichts 42 zentriert werden, wenn die Geschwindigkeit in Blickrichtung null ist.

2. Meßvorrichtung nach Anspruch 1, dadurch gekennzeichnet, daß sie ein Doppelprisma (12) umfaßt, das sich am Ausgang des Interferometers (10) befindet, um den Lichtfluß entsprechend den jeweiligen Filtern zu trennen.

3. Meßvorrichtung nach irgendeinem der Ansprüche 1 und 2, dadurch gekennzeichnet, daß sie einen vertikalen Empfangskanal (70) umfaßt, der als Referenzkanal dient.

4. Meßvorrichtung nach irgendeinem der Ansprüche 1 bis 3, dadurch gekennzeichnet, daß sie wenigstens zwei Meßkanäle (71, 74) umfaßt, entsprechend den Geschwindigkeitskomponenten in verschiedenen Hauptrichtungen.

5. Meßvorrichtung nach irgendeinem der Ansprüche 1 bis 4, dadurch gekennzeichnet, daß sie einen kontinuierlichen Laser (57) umfaßt, der einen Strahl stabiler Wellenlänge emittiert und zur Stabilitätskontrolle des Interferometers (10) verwendet wird.

6. Meßvorrichtung nach irgendeinem der Ansprüche 1 bis 5, dadurch gekennzeichnet, daß das Empfängersystem (4) eine Vielzahl von Teleskopen (61-64) für jede Meßrichtung umfaßt.

7. Meßvorrichtung nach irgendeinem der Ansprüche 1 bis 5, dadurch gekennzeichnet, daß das Empfängersystem (4) einen einzigartigen Drehaufbau umfaßt, der Messungen in verschiedenen Richtungen gestattet.

8. Meßvorrichtung nach irgendeinem der Ansprüche 1 bis 7, dadurch gekennzeichnet, daß sie optische Fasern (65-68) umfaßt, die die Verbindung zwischen den Empfängerteleskopen (61-64) und einer Analysenvorrichtung (6) gewährleisten.

9. Meßvorrichtung nach irgendeinem der Ansprüche 1 bis 8, dadurch gekennzeichnet, daß sie ein Teleskop (2) umfaßt, das die Divergenz des vom Laser (1) emittierten Strahls mindert.

10. Vorrichtung nach irgendeinem der Ansprüche 1 bis 9, worin die Spiegel des Interferometers (10) durch molekulare Adhäsion aneinander befestigt sind.

## Claims

1. Device for measuring the speed of the wind at medium altitude by Doppler effect in the range of light frequencies in which:
   . a laser (1) emits pulses,
   . a reception system (4) comprising a telescope receives the scattered light,
   . an interferometer (10) is used for measuring the spectral displacement of the scattered light with respect to the emitted light,
   characterised in that the interferometer is a Fabry-Pérot interferometer in which a portion of one of the mirrors (30, 31) of the interferometer (10) is covered by an additional thickness (34), the spacing of the two mirrors (30, 31) and the additional thickness (34) being determined such that the passbands (43, 44) of each of the two filters thus produced are centred on the sides of the spectral distribution of the backscattered light 42 when the speed in the viewing direction is zero.

2. Measurement device according to Claim 1, characterised in that it comprises a double prism (12) placed at the exit of the interferometer (10) in order to split the light flux corresponding respectively to each of the filters.

3. Measurement device according to any one of Claims 1 and 2, characterised in that it comprises a vertical reception channel (70) used as a reference channel.

4. Measurement device according to any one of Claims 1 to 3, characterised in that it comprises at least two measurement channels (71, 74) corresponding to speed components in different cardinal directions.

5. Measurement device according to any one of Claims 1 to 4, characterised in that it comprises a continuous-wave laser (57) emitting a stable-wavelength beam used for controlling the stability of the interferometer (10).

6. Measurement device according to any one of Claims 1 to 5, characterised in that the reception system (4) comprises a plurality of telescopes (61-64) for each measurement direction.

7. Measurement device according to any one of Claims 1 to 5, characterised in that the reception system (4) comprises a single pivoting structure permitting measurements in various directions.

8. Measurement device according to any one of Claims 1 to 7, characterised in that it comprises optical fibres (65-68) providing the connection between the reception telescopes (61-64) and an analysis device (6).

9. Measurement device according to any one of Claims 1 to 8, characterised in that it comprises a telescope (2) reducing the divergence of the beam emitted by the laser (1).

10. Device according to any one of Claims 1 to 9, in which the mirrors of the interferometer (10) are fixed one to the other by molecular adhesion.

FIG.1

FIG.7

FIG.2

FIG.4

FIG.3

## FIG.5

fibres sud
fibres nord
fibres est
fibres ouest

FIG.6